(19) Europäisches Patentamt
European Patent Office
Office européen des brevets

(11) **EP 1 943 088 B1**

(12) **EUROPEAN PATENT SPECIFICATION**

(45) Date of publication and mention
of the grant of the patent:
**28.04.2010 Bulletin 2010/17**

(51) Int Cl.:
**B29D 30/06** *(2006.01)*          **B29D 30/00** *(2006.01)*
**B29C 35/02** *(2006.01)*

(21) Application number: **05812940.4**

(22) Date of filing: **30.09.2005**

(86) International application number:
**PCT/IT2005/000570**

(87) International publication number:
**WO 2007/036965 (05.04.2007 Gazette 2007/14)**

(54) **PROCESS FOR THE PRODUCTION OF TYRES FOR VEHICLE WHEELS**

VERFAHREN ZUR HERSTELLUNG VON REIFEN FÜR FAHRZEUGRÄDER

PROCÉDÉ DE PRODUCTION DE PNEUS DESTINÉS À DES ROUES DE VÉHICULE

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**16.07.2008 Bulletin 2008/29**

(73) Proprietor: **PIRELLI TYRE S.p.A.**
**20126 Milano (IT)**

(72) Inventors:
• **MARCHINI, Maurizio**
**I-20126 Milano (IT)**
• **MARIANI, Fiorenzo**
**I-20126 Milano (IT)**

(74) Representative: **Bottero, Claudio et al**
**Porta, Checcacci & Associati S.p.A.**
**Via Trebbia 20**
**20135 Milano (IT)**

(56) References cited:
**EP-A- 0 913 249          DE-A1- 4 417 708**
**US-A1- 2002 174 939    US-B1- 6 322 342**

• **PATENT ABSTRACTS OF JAPAN vol. 1997, no.
11, 28 November 1997 (1997-11-28) -& JP 09
193159 A (SUMITOMO RUBBER IND LTD), 29 July
1997 (1997-07-29)**

## Description

### Background of the invention

The present invention relates to a process for the production of tyres for vehicle wheels.

In particular, the present invention relates to a process for the production of tyres for vehicle wheels built on a toroidal support.

### Technical state of the art

The tyre production cycle provides that, after a building process wherein the different components of the tyre itself are made and/or assembled, a molding and vulcanisation process is carried out which aims at defining the tyre structure according to a desired geometry and tread pattern.

For this purpose, the tyre is closed inside a molding cavity defined internally a vulcanisation mold and shaped according to the requirements of the tyre to be obtained.

A tyre generally comprises a toroidally ring-shaped carcass including one or more carcass plies, strengthened with reinforcing cords lying in substantially radial planes (a radial plane contains the rotation axis of the tyre). Each carcass ply has the axially opposite ends integrally associated with at least one metal annular reinforcing structure, known as bead core, which constitutes the reinforcing at the beads, i.e. at the radially internal ends of the tyre, having the function of enabling the assembly of the tyre with a corresponding mounting rim. Placed crown wise to said carcass is a band of elastomer, called tread band, in which a raised pattern for ground contact is formed at the end of the vulcanisation and molding steps. A reinforcing structure usually known as belt structure is placed between the carcass and the tread band. This structure usually comprises, in the case of car tyres, at least two radially superposed strips of rubberised fabric provided with reinforcing cords, usually of metallic material, positioned parallel to each other in each strip and in a crossed relationship with the cords of the adjacent strip, preferably symmetrically arranged with respect to the equatorial plane of the tyre. Preferably, said belt structure further comprises, at a radially external position thereof, at least on the ends of the underlying belt strips, also a third layer of textile or metallic cords, circumferentially disposed (at 0 degrees).

Finally, in tyres of the tubeless type, i.e. devoid of an air tube, there is a radially inner layer, called liner, which has imperviousness features to ensure the air-tightness of the tyre itself.

It should be noted that, to the aims of the present description by the term "elastomer material" it is intended a composition comprising at least one elastomer polymer and at least one reinforcing filler. Preferably, this composition further comprises additives such as cross linking and/or plasticizing agents. By virtue of the cross linking agents, this material can be cross linked through heating, so as to form the final manufactured product.

In conventional plants for the production of tyres, technological evolution has turned towards the search for technical solutions leading to increasingly quick and reliable apparatuses, so as to minimise the time necessary to produce each individual tyre, with the same quality of the finished product.

Plants with high production capacity in terms of pieces produced per unit time have thus been made, adopting manufacturing plants with low possibilities of modification, but which maximise production in series of tyres with identical structural features.

For example, in document EP 922561 A2 a process for managing the production of tyres is proposed wherein, to reduce or eliminate the storage time of the green tyres and therefore the number of green tyres in the storage step, a vulcanisation plant with a number of molds suitable for constantly absorb the productivity of the manufacturing plant is provided.

However, this process has problems in terms of operative flexibility of the production plant since it does not allow the simultaneous processing of different types of tyre.

In recent times, production processes of tyres wherein a green tyre is built on a rigid toroidal support have been introduced in the field. Said processes are preferably used for tyres produced from a limited number of elementary semifinished products fed onto said toroidal support whose outer profile coincides with that of the radially internal surface of the tyre that is wished to be produced. The toroidal support is moved, preferably by means of a robotised system, among a plurality of workstations in each of which a particular building step of the tyre is carried out, through automated sequences. At the end of the building steps, the toroidal support with the tyre supported thereby is positioned inside a vulcanisation mold.

International Patent Application published under No. WO 01/32409, in the name of the same Applicant, illustrates a process for producing tyres that are different to each other, wherein in each building plant and in each vulcanisation plant at least one series of tyres comprising at least one first and one second tyre model which are different to each other is treated simultaneously, and wherein the transfer of the tyres from the building plant to the vulcanisation plant is carried out according to a rate equal to the transfer rate of the tyres to each of said workstations.

The Applicant has noted that a vulcanisation process as described, for example, in WO 01/32409 has a high energy consumption due to the quantity of heat absorbed by each toroidal support during the aforementioned process, heat that is mostly dispersed into the atmosphere after the removal of the tyre from the support itself at the end of the vulcanisation process.

Moreover, in order to carry out correctly the building operations of the tyre inside the building plant, it is often necessary to use a further quantity of energy to cool down the toroidal support that has just finished a production cycle, and therefore a vulcanisation process, before using it again inside the workstations provided for building the tyre.

Finally, the process according to what has been illustrated in the aforementioned document may in some particular cases cause excessive vulcanisation ("overcuring") of some portions of the tyre due to the concomitant heat flows coming from the mold, from at least one working fluid and from the toroidal support itself. The aforementioned phenomenon determines an undesired alteration of the mechanical features of the finished tyre.

The Applicant has thus perceived that by using a substantial part of the heat stored in each toroidal support, it is possible to carry out a vulcanisation process which requires a minor quantity of energy with the same productivity, or which increases its productivity keeping the energy requirement constant, at the same time improving the quality features of the final product.

DE 44 17 708 discloses a method for the manufacture of hollow rubber or elastomer products, specifically hollow pipe or tube connector sections of complex design, using at least one core, characterized by the use of a lost core, preferably formed as a single piece of low melting-point core material, which is inserted in the vulcanizing mould and enclosed in elastomer material by spraying or casting, such that the elastomer material is at least partially vulcanized by the tempering of the vulcanizing mould, without melting the core, and the core is subsequently lost from the resulting hollow product by melting.

JP 09 193159 discloses a semivulcanized tire TH cured employing microwave, generated by a microwave generating device, in a post cure box to procure effected by a press vulcanizing machine.

EP-A-0 913 249 discloses a post-curing process, in a thermally insulated and non-energized environment, for the vulcanization of pneumatic tyres, comprising removing the pneumatic tyres from its respective vulcanizer or vulcanization mould as soon as it reaches a consistency stage sufficient to keep the geometry thereof unchanged, and then transferring it to a confined environment where the post-curing step is carried out under conditions of controlled cooling in a thermally insulated environment devoid of any heating system.

The Applicant has found that it is possible to achieve the aforementioned object and, in Particular, to obtain an energy saving and an increasement of the productivity or, with the same productivity, a reduction of the investment costs, through a process for the production of tyres which uses toroidal supports in the building step, which provides a partial vulcanisation of the tyre in a vulcanisation mold and the completion of the vulcanisation of the tyre outside said vulcanisation mold using the heat given to the tyre by the toroidal support, i.e. the thermal inertia of the latter.

In such a way the Applicant has also discovered that it is possible to improve the quality features of the finished tyre since the phenomenon of "overcuring" is prevented or in any case reduced to the minimum.

The invention therefore relates to a process for the production of tyres for vehicle wheels comprising the steps of:

  a) building a tyre on a respective toroidal support assembling each structural component of the tyre according to a predetermined sequence at respective workstations;

  b) transferring each tyre built on the toroidal support to a vulcanisation plant;

  c) molding and partially vulcanising said tyre on the toroidal support in a respective vulcanisation mold associated with said vulcanisation plant, wherein said tyre (8) remains inside said mold for a stop time comprised between about 65% and about 85% with respect to the time required for the complete vulcanisation;

  d) removing the partially vulcanised tyre with the respective toroidal support from the respective vulcanisation mold;

  e) completing the vulcanisation of the tyre outside said vulcanisation mold through the heat given to the tyre by said toroidal support.

In this way, the entire production process for the production of tyres improves its energy yield, for example it becomes possible to increase the productivity of the manufacturing plant without modifying the size of the vulcanisation apparatus. Moreover, the aforementioned overcuring phenomena are substantially avoided.

In a preferred embodiment of the present invention, the vulcanisation of the tyre is completed in a closed chamber so as to reduce possible thermal shocks to the minimum.

In a preferred embodiment, the process provides a further step f) of transferring the partially vulcanised tyres, with the respective toroidal supports, inside said closed chamber.

In a further preferred embodiment, the process according to the present invention provides a step of controlling the temperature inside said closed chamber, so as to ensure a constant and repeatable during time supply of heat so as to obtain the uniformity of the levels of vulcanisation of the production and therefore the repeatability of the performance and quality features of the final product.

Further preferred features of the process for the production of tyres according to the invention are defined in the attached dependent claims.

## Brief description of the figures

Further features and advantages of the invention will be clear from the following description of some preferred examples of tyres production processes according to the invention, made - for indicating and not limiting purposes - with reference to the attached drawings wherein:

- figure 1 shows a schematic view of a preferred embodiment of a plant for the production of tyres during a step of the production process according to the present invention; and

- figure 2 shows the thermal cycle whereto each toroidal support associated with a tyre is subjected during the production process according to the present invention.

## Detailed description of the preferred embodiments

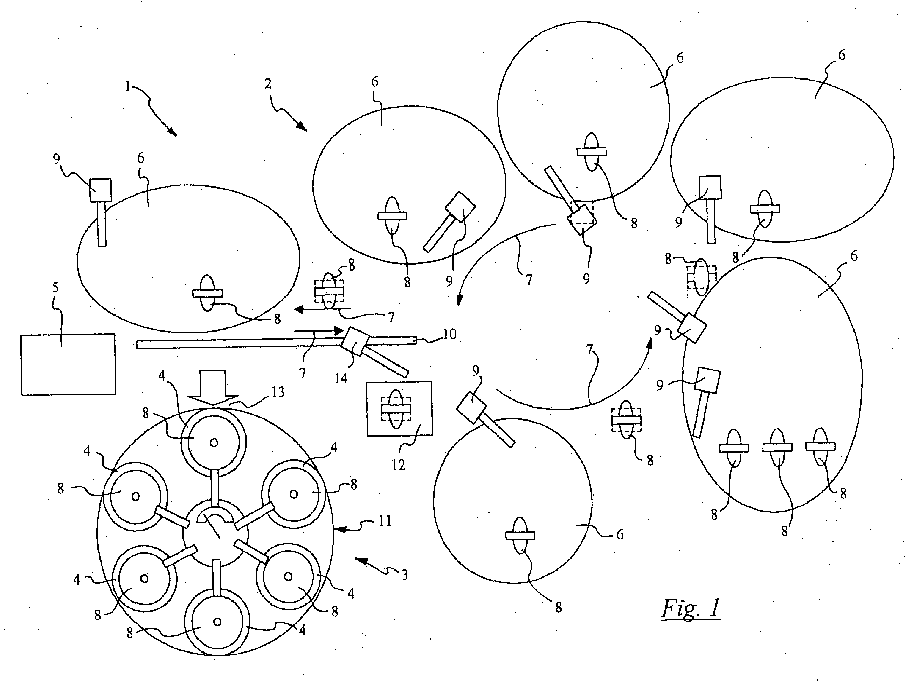

With reference to figure 1, by reference numeral 1 has been generally identified a plant for the production of tyres 8 for vehicle wheels, through which the production process according to the present invention is preferably carried out.

The plant 1 comprises a building plant 2 wherein each tyre 8 is built by assembling structural components according to a predetermined sequence, a vulcanisation plant 3 wherein each built tyre 8 is partially vulcanised inside a respective vulcanisation mold 4, and a closed chamber 5 wherein the vulcanisation of each tyre 8 is completed according to the modalities better illustrated hereafter.

The building plant 2 comprises a plurality of workstations 6 preferably arranged along a closed loop path indicatively represented by the arrows 7 in figure 1.

Preferably, said workstations 6 operate simultaneously with each other, each on at least one tyre 8 in order to assemble at least one of its structural components thereon.

It should be noted that in the present description and in the subsequent claims by "structural component" of the tyre it is to be intended any component selected for example among: liner, sub-liner, carcass ply/plies, sub-belt insert, belt strips both crossed over and at zero degrees, attachment sheet for the tread band, tread band, bead core, bead filler, textile or metallic reinforcing inserts, anti-abrasion insert, or any portion thereof.

In particular, during the assembly step the various structural components used for manufacturing each tyre 8 are advantageously engaged on a toroidal support (not illustrated in greater detail) whose shape substantially reproduces the internal conformation of the tyre 8 to be obtained. Such a toroidal support is preferably of the collapsible type or that can be decomposed into a plurality of sectors, so as to be easily removed from the tyre when processing has been completed.

Many models of tyres 8, which differ in terms of size and/or structural and/or chemical-physical features and/or appearance, can be simultaneously processed in the building plant 2, in the vulcanisation plant 3 and in the chamber 5, according to the present invention.

Transfer devices 9 operate on the building plant 2 to sequentially transfer each of the tyres 8 from one of the workstations 6 to the subsequent workstation, so as to determine the sequential assembly of all of the components of the tyre 8, to then carry out the transfer of the latter to the vulcanisation plant 3 and finally to the chamber 5.

Preferably, such transfer devices 9 comprise one or more robotised arms associated with at least one of the workstations 6 and operating on the individual toroidal supports to carry out the sequential transfer of each tyre 8 being processed.

More specifically, in the preferred embodiment illustrated in figure 1 a first robotised arm 14 is provided, possibly movable along a guide 10, operating between the building plant 2, the vulcanisation plant 3 and the chamber 5 to pick up a finished tyre 8 therefrom and to transfer it into a changing station 12, where the tyre 8 itself is removed from the respective toroidal support. From said changing station 12, the toroidal support is transferred, preferably through the same first robotised arm 14, into a subsequent workstation 6 from which it is picked up to be used for manufacturing a new tyre 8.

The vulcanisation plant 3 comprises a number of vulcanisation molds 4 suitable for the production capacities of the production plant 1. In particular, in the embodiment shown in figure 1, the vulcanisation plant 3 comprises six vulcanisation molds 4.

Preferably, the vulcanisation molds 4 are mounted on a rotatable turntable 11 which may be actuated in rotation so as to make the same vulcanisation molds 4 carry out a closed loop path, taking them sequentially one after the other to a loading/unloading station 13 of the tyres 8.

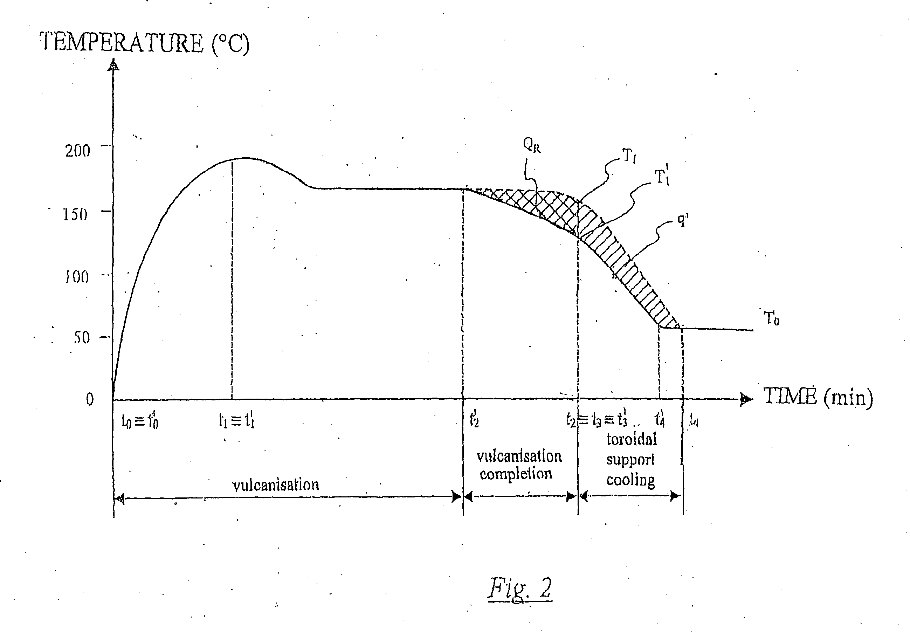

With reference to the production plant described above and to figures 1 and 2, an embodiment of the process according to the present invention will be now described.

In a first step a), each tyre 8 is built on a respective toroidal support by assembling each structural component of the tyre according to a predetermined sequence at the aforementioned workstations 6 of the building plant 2.

This building step of each tyre 8 is carried out in a known way and therefore will not be further described. For possible further information on the ways of carrying out this step it is to be referred to the International Patent Application published under No. WO 01/32409, in the name of the same Applicant, whose content is herein incorporated by reference.

When the building step is complete, the process for the production of tyres according to the present invention provides to carry out a step b) of transferring the tyres 8 built on the toroidal supports to the vulcanisation plant 3, preferably by means of the transfer devices 9.

In the embodiment shown in figure 1, the transfer of each tyre 8 into the vulcanisation plant 3 is carried out after the removal of a partially vulcanised tyre 8 from the same vulcanisation plant 3.

In a subsequent step c) carried out in the vulcanisation plant 3, the tyres 8 built on the respective toroidal supports are molded and partially vulcanised inside a respective vulcanisation mold 4 associated with the vulcanisation plant 3 of said production plant 1.

This molding and partial vulcanisation step of the tyres 8 is preferably carried out using at least one pressurised primary working fluid and at least one pressurised secondary working fluid. According to modalities known in the field, at least one of said working fluids is preferably heated to arrive at the operative working temperature.

In a preferred embodiment, said secondary working fluid is suitable for pressing the green tyre 8 from the outside towards the inside, while the primary working fluid at the same time supplies heat to the inner surface of said tyre 8, carrying out a prevulcanisation of the most radially inner layer of the tyre itself and of the bead zone. In such a way it is possible to subsequently carry out a molding and partial vulcanisation step that does not involve dishomogeneity and irregularity in the finished tyre.

This molding and partial vulcanisation step is preferably carried out by supplying said pressurised primary working fluid inside the toroidal support pressing a radially outer surface of the tyre 8 against the inner walls of the vulcanisation mold 4 and supplying heat to the tyre 8 itself.

The temperature and pressure conditions inside the vulcanisation mold 4, as well as the features of said primary working fluid and of said secondary working fluid, are fixed according to the operating modes of the vulcanisation process and the type of tyre 8 to be vulcanised, as for example described in document WO 2004/045837 in the name of the same Applicant.

The process according to the present invention then provides a step d) of removal of the molded and partially vulcanised tyres 8 from the respective vulcanisation molds 4. According to the invention, the removal of the tyres 8 from the vulcanisation molds 4 is carried out before the vulcanisation step has been completed. In particular, a reduction of the stop time of the tyres 8, positioned on the respective toroidal supports, in the vulcanisation molds 4, comprised between about 15% and about 35%, with respect to the stop time provided for a complete vulcanisation is provided, said reduction being preferably comprised between about 20% and about 30%.

Regarding this it should be observed that the complete vulcanisation time of a tyre, i.e. the stop time thereof inside a mold, is determined for each type of tyre by combining design data with experimental evidence. In particular, it is estimated considering its geometric features and the vulcanisation curves of the various elastomer materials of which it is composed. Thereafter, through indoor tests and road tests, said vulcanisation time, which is univocally associated with the tyre to be produced, is optimised. Normally, assuming a vulcanisation temperature of about 180°C, it ranges from a vulcanisation time of about 14-16 minutes for a tyre of a two-wheeled vehicle to a time of about 18-25 minutes for a car tyre up to a time of about 35-50 minutes for a tyre for lorries or heavy vehicles in general.

Finally, the vulcanisation of the tyre 8 is completed in a step e) outside said vulcanisation mold 4 by means of the heat stored by the toroidal support in the previous vulcanisation step and released to the tyre 8.

The Applicant has in fact found that it is possible to complete the vulcanisation of the tyres 8 outside of the vulcanisation molds 4 by using the thermal inertia of the toroidal supports.

In this way, the vulcanisation molds 4 are engaged by each tyre 8 for a shorter time with respect to known vulcanisation processes and can therefore receive a greater number of tyres 8 with a consequent increase of the productivity. Alternatively, it is possible to reduce the investment costs since in order to obtain the same productivity it is sufficient to have a smaller plant.

Moreover, the process for the production of tyres according to the present invention achieves a substantial energy saving since it provides the supply of heat to the vulcanisation mold for a shorter time with respect to known processes. As a matter of fact, if we indicate the quantity of heat necessary to obtain the complete vulcanisation of each tyre 8 with Q, in known processes, we note that it is given by:

$$Q = Qs + Qv + Qst + Qvt \qquad (I)$$

where:

Qs is the quantity of heat given by the mold 4 and absorbed by the tyre 8;

Qv is the quantity of heat given by the hot vulcanisation fluid passing through the toroidal support and absorbed by the tyre 8;

Qst is the quantity of heat given by the mold 4 and absorbed by the toroidal support;

Qvt is the quantity of heat given by the hot vulcanisation fluid passing through the toroidal support and absorbed by the toroidal support itself.

In the production process according to the present invention, Qv and Qvt are unchanged with respect to known processes whereas Qs and Qst, i.e. the quantity of heat totally given by the mold 4 to the tyre 8 and to the toroidal support, is reduced of a quantity that can range from about 10% to about 30%. In other words the whole quantity of heat given by the mold 4 to the tyre 8 and to the respective toroidal support, according to the present invention, is comprised between about 70% and about 90% of the quantity of heat necessary to obtain the complete vulcanisation of said tyre 8.

The saved quantity of heat can clearly be seen from figure 2 that illustrates the thermal cycle of a toroidal support during the vulcanisation of a tyre 8 according to the present invention.

In particular, figure 2 shows two diagrams of the temperature of the toroidal support according to time during two production processes of a tyre 8. The thermal diagram of the vulcanisation step of the production process according to the present invention is traced with a solid line and the thermal diagram of the vulcanisation step of the known production processes is traced with a broken line. The hatched area, enclosed between the two diagrams and symbolically indicated with Qr, represents the quantity of heat saved by the process for the production of tyres according to the present invention, with respect to known processes. The value of Qr is given by the difference between Q and Q' where Q' indicates the quantity of heat necessary to obtain the complete vulcanisation of each tyre 8 in the process according to the present invention.

Hereinafter all the measurements that refer to the production process according to the present invention will be identified by an apostrophe.

Summarising:

$$Qr = Q - Q';$$

where

$$Q = Qs + Qv + Qst + Qvt$$

and

$$Q' = Qs' + Qv' + Qst' + Qvt'$$

Since $Qv = Qv'$ and $Qvt = Qvt'$, it follows that

$$Qr = (Qs - Qs') + (Qst - Qst')$$

In other words, as stated previously, the energy saving is correlated to a smaller quantity of heat given by the vulcanisation mold 4 to the toroidal support and to the tyre 8.

Moreover, in the production process according to the present invention there is a further advantage related to the cooling of the toroidal support that is achieved in the step of completion of the vulcanisation of the tyre 8 outside of the vulcanisation mold. As a matter of fact, since at the end of the vulcanisation process of a tyre 8 it is necessary to cool down the toroidal support so as to be able to use it again for producing a new tyre 8, it is clear that in the production process according to the present invention part of this cooling is advantageously carried out during the step of completion of vulcanisation thanks to the heat removed by the tyre with a reduction of the time (and/or energy) subsequently required to take the temperature of the toroidal support to a temperature suitable for the manufacture of a new tyre 8. In figure 2 the energy saving due to the smaller quantity of heat to be removed is symbolised by the hatched area enclosed between the two curves and symbolically indicated with q'.

It should be observed in fact that each toroidal support at the end of the vulcanisation process is at a temperature T1 comprised between about 140°C and about 180°C, whereas at the beginning of the manufacturing process its temperature T0 generally must not exceed 50°C-60°C to avoid problems of pre-cross linking in the radially inner layer of the tyre.

By indicating with M the mass of the toroidal support and with Cm its average specific heat, the quantity of heat q which has to be given to pass from the end vulcanisation temperature T1 to the beginning manufacture temperature T0 is given by:

$$q = Cm \ x \ M \ x \ (T1-T0)$$

Consequently, in the process according to the invention, using part of the heat q to complete the vulcanisation of the tyre, the end vulcanisation temperature T1' is inferior to T1 as well as inferior will be the quantity of heat q' to be dispersed at the end of the process itself, this quantity of heat being given by:

$$q' = Cm \ x \ M \ x \ (T1'-T0)$$

This can clearly be seen for example in figure 2 wherein for a particular vulcanisation process, the time at which the vulcanisation of the tyre 8 begins is indicated with t0=t0', the time at which the molding of the tyre 8 begins is indicated with t1=t1', the time at which the tyre is removed from the vulcanisation mold 4 together with the respective toroidal support is indicated with t2, t2' and the time at which the vulcanisation is completed and the vulcanised tyre is removed from the toroidal support is indicated with t3=t3'. At time t3, t3' begins the step of cooling only the toroidal support which, as mentioned before and as can be clearly seen, in the process according to the present invention has a shorter duration compared to known processes. More specifically, in figure 2 it can be seen that t4', the time at which the toroidal support has arrived at the working temperature for a subsequent manufacturing step, is inferior to t4.

In the example shown it can be seen that it is presumed that t3=t3', even if these times can be slightly different to each other of about 1-3 minutes, moreover in the vulcanisation step for example according to document WO 2004/045837 t2 is substantially equal to t3.

According to a preferred embodiment of the present invention, step e) of completing the vulcanisation of tyre 8 is carried out inside a closed chamber 5 so as not to disperse the heat previously stored by the toroidal support. Preferably, the aforementioned closed chamber may be made or coated with materials that make it substantially thermally insulated from the outside.

Said closed chamber 5 may enclose the entire vulcanisation plant 3 or be independent therefrom, as shown in figure 1.

In this second case, the production process according to the present invention provides a further step f) of transferring the partially vulcanised tyre 8 removed from the vulcanisation mold 4 in said closed chamber 5.

Advantageously, the process for the production of tyres according to the present invention further comprises the step of suitably controlling the temperature inside the chamber 5 wherein the vulcanisation of the tyres 8 is completed. In this way it is possible to control the temperature of the tyre 8 more effectively, thus reducing possible thermal shocks to the minimum and, above all, it is possible to vary the quantity of heat actually administered to the tyre 8 according to nature, size and type thereof.

Advantageously, the time at which a tyre 8 for vehicles remains in said closed chamber 5 is substantially equal to the reduction of the stop time in the mold t3-t2'. Preferably, said time is comprised between about 2 and about 10 minutes, and even more preferably between about 4 and about 6 minutes.

For example, to produce a tyre of type 225/50 R 17 is generally required a vulcanisation time of about 26 minutes (of which about 22 minutes are necessary for the molding of the tyre). In the process according to the present invention, the stop time inside the vulcanisation mold 4 is reduced by a time period Δt equal to about 4 minutes and the step of completion of the vulcanisation of the tyre is carried out, through the heat given by the toroidal support, in a time period substantially equal to Δt which as mentioned before is equal to t3-t2'.

The process for the production of tyres according to one embodiment of the present invention comprises a further step g) of removal of the completely vulcanised tyre 8 from the closed chamber 5. This step may be carried out before or after the removal of the tyre 8 from the toroidal support according to the operating requirements.

The production process according to the present invention optionally provides that the step f) of transferring a partially vulcanised tyre 8 into chamber 5 is carried out after said step g) of removal of a completely vulcanised tyre 8 from the same chamber 5.

## Claims

1. Process for the production of tyres for vehicle wheels comprising the steps of:

   a) building a tyre (8) on a respective toroidal support assembling each structural component of the tyre according to a predetermined sequence at respective workstations (6);
   b) transferring each tyre (8) built on the toroidal support to a vulcanisation plant (3);
   c) molding and partially vulcanising said tyre (8) on the toroidal support in a respective vulcanisation mold (4), associated with said vulcanisation plant (3), wherein said tyre (8) remains inside said mold for a stop time comprised between about 65% and about 85% with respect to the time required for the complete vulcanisation;
   d) removing the partially vulcanised tyre (8) with the respective toroidal support from the respective vulcanisation mold (4);
   e) completing the vulcanisation of the tyre (8) outside said vulcanisation mold (4) through the heat given to the tyre (8) by said toroidal support.

2. Process for the production of tyres (8) for vehicle wheels according to claim 1, wherein step e) is carried out inside a closed chamber (5).

3. Process for the production of tyres (8) for vehicle wheels according to claim 2, further comprising the step f) of transferring the partially vulcanised tyres (8) and the respective toroidal supports removed from the respective vulcanisation molds (4) into said closed chamber (5).

4. Process for the production of tyres (8) for vehicle wheels according to claim 2 or 3, also comprising the step of controlling the temperature inside the closed chamber (5).

5. Process for the production of tyres (8) for vehicle wheels according to any of the claims from 2 to 4, wherein each tyre (8) remains in the closed chamber (5) for a time t comprised between about 2 and about 10 minutes.

**6.** Process for the production of tyres (8) for vehicle wheels according to claim 5, wherein each tyre (8) remain in the closed chamber (5) for a time t comprised between about 4 and about 6 minutes,

**7.** Process for the production of tyres (8) for vehicle wheels according to any of the previous claims, wherein the step b) of transferring the tyres (8) built on the toroidal supports to a vulcanisation plant (3) is carried out by means of a robotised arm.

**8.** Process for the production of tyres (8) for vehicle wheels according to any of the claims from 3 to 7, wherein the step f) of transferring the partially vulcanised tyres (8) and the respective toroidal supports is carried out by means of a robotised arm.

**9.** Process for the production of tyres (8) for vehicle wheels according to any of the previous claims, wherein the vulcanisation molds (4) are moved in said vulcanisation plant (3) according to a closed loop path, the transfer of each tyre (8) into the vulcanisation plant (3) being carried out after the removal of a partially vulcanised tyre (8) from the vulcanisation plant (3) itself.

**10.** Process for the production of tyres (8) for vehicle wheels according to any of the claims for 2 to 7, also comprising the step g) of removing the completely vulcanised tyres (8) from the closed chamber (5).

**11.** Process for the production of tyres (8) for vehicle wheels according to claim 10, wherein said step f) of transferring the partially vulcanised tyres (8) and the respective toroidal supports is carried out after said step g) of removal of the completely vulcanised tyres (8) from the chamber (5).

**12.** Process for the production of tyres (8) for vehicle wheels according to any of the previous claims, wherein said stop time is comprised between about 70% and about 80% with respect to the time required for complete vulcanisation.

**13.** Process for the production of tyres (8) for vehicle wheels according to any of the previous claims, wherein during said step c) the mold (4) gives to each tyre (8) and to the respective toroidal support a total quantity of heat comprised between about 70% and about 90% of the quantity of heat necessary to obtain the complete vulcanisation of said tyre (8).

**Patentansprüche**

**1.** Verfahren zur Herstellung von Reifen für Fahrzeugräder, umfassend die Schritte:

a) Aufbauen eines Reifens (8) auf einem entsprechenden Toroidträger, wobei jede Strukturkomponente des Reifens gemäß einer bestimmten Sequenz an entsprechenden Arbeitsstationen (6) montiert wird;
b) Übertragen jedes Reifens (8), der auf dem Toroidträger ausgebildet ist, an eine Vulkanisierungsanlage (3);
c) Ausformen und teilweises Vulkanisieren des Reifens (8) auf dem Toroidträger in einer entsprechenden Vulkanisierungsform (4), die mit der Vulkanisierungsanlage (3) assoziiert ist, wobei der Reifen (8) für eine Haltezeit in der Form verbleibt, die zwischen ungefähr 65% und ungefähr 85% der Zeit beträgt, die für das vollständige Vulkanisieren erforderlich ist;
d) Entfernen des teilweise vulkanisierten Reifens (8) mit dem entsprechenden Toroidträger aus der entsprechenden Vulkanisierungsform (4);
e) Fertigstellen der Vulkanisierung des Reifens (8) außerhalb der Vulkanisierungsform (4) mittels der Hitze, die von dem Toroidträger auf den Reifen (8) übertragen wird.

**2.** Verfahren zur Herstellung von Reifen (8) für Fahrzeugräder nach Anspruch 1, bei dem der Schritte e) in einer geschlossenen Kammer (5) ausgeführt wird.

**3.** Verfahren zur Herstellung von Reifen (8) für Fahrzeugräder nach Anspruch 2, ferner umfassend den Schritt f) des Übertragens der teilweise vulkanisierten Reifen (8) und der entsprechenden Toroidträger, die aus den entsprechenden Vulkanisierungsformen (4) entfernt sind, in die geschlossene Kammer (5).

**4.** Verfahren zur Herstellung von Reifen (8) für Fahrzeugräder nach Anspruch 2 oder 3, ferner umfassend den Schritt des Steuerns der Temperatur in der geschlossenen Kamme (5).

**5.** Verfahren zur Herstellung von Reifen (8) für Fahrzeugräder nach einem der Ansprüche 2 bis 4, bei dem jeder Reifen (8) für eine Zeit t in der geschlossenen Kammer (5) verbleibt, die zwischen ungefähr 2 und ungefähr 10 Minuten liegt.

**6.** Verfahren zur Herstellung von Reifen (8) für Fahrzeugräder nach Anspruch 5, bei dem jedes Rad (8) für eine Zeit t in der geschlossenen Kammer (5) verbleibt, die zwischen ungefähr 4 und ungefähr 6 Minuten liegt.

**7.** Verfahren zur Herstellung von Reifen (8) für Fahrzeugräder nach einem der vorhergehenden Ansprüche, bei dem der Schritt b) des Übertragens der Räder (8), die auf dem Toroidträger aufgebaut sind, zu einer Vulkanisierungsanlage (3), mittels eines Roboterarms ausgeführt wird.

**8.** Verfahren zur Herstellung von Reifen (8) für Fahrzeugräder nach einem der Ansprüche 3 bis 7, bei dem der Schritt f) des Übertragens der teilweise vulkanisierten Reifen (8) und der entsprechenden Toroidträger mittels eines Roboterarms ausgeführt wird.

**9.** Verfahren zur Herstellung von Reifen (8) für Fahrzeugräder nach einem der vorhergehenden Ansprüche, bei dem die Vulkanisierungsformen (4) in der Vulkanisierungsanlage (3) gemäß einem geschlossenen Kreisweg bewegt werden, wobei die Übertragung von jedem Reifen (8) in die Vulkanisierungsanlage (3) nach der Entfernung eines teilweise vulkanisierten Reifens (8) aus der Vulkanisierungsanlage (3) ausgeführt wird.

**10.** Verfahren zur Herstellung von Reifen (8) für Fahrzeugräder nach einem der Ansprüche 2 bis 7, ferner umfassend den Schritt g) des Entfernens der vollständig vulkanisierten Reifen (8) aus der geschlossenen Kammer (5).

**11.** Verfahren zur Herstellung von Reifen (8) für Fahrzeugräder nach Anspruch 10, bei dem der Schritt f) des Übertragens der teilweise vulkanisierten Reifen (8) und der entsprechenden Toroidträger nach dem Schritt g) des Entfernens der vollständig vulkanisierten Reifen (8) aus der Kammer (5) ausgeführt wird.

**12.** Verfahren zur Herstellung von Reifen (8) für Fahrzeugräder nach einem der vorhergehenden Ansprüche, bei dem die Haltezeit zwischen ungefähr 60% und ungefähr 80% der Zeit beträgt, die für ein vollständiges Vulkanisieren erforderlich ist.

**13.** Verfahren zur Herstellung von Reifen (8) für Fahrzeugräder nach einem der vorhergehenden Ansprüche, bei dem während des Schritts c) die Form (4) jedem Reifen (8) und dem entsprechenden Toroidträger eine Gesamtwärmemenge zwischen ungefähr 70% und ungefähr 90% der Wärmemenge überträgt, die zur Erhaltung der vollständigen Vulkanisierung des Reifens (8) erforderlich ist.

## Revendications

**1.** Procédé pour la production de pneus pour roues de véhicules comprenant les étapes suivantes:

a) fabriquer un pneu (8) sur un support torique respectif en assemblant chaque composant structurel du pneu selon une séquence prédéterminée a des postes de travail respectifs (6);
b) transférer chaque pneu (8) fabriqué sur le support torique vers une installation de vulcanisation (3);
c) mouler et vulcaniser partiellement ledit pneu (8) sur le support torique dans un moule de vulcanisation (4) respectif, associé à ladite installation de vulcanisation (3), dans laquelle ledit pneu (8) reste à l'intérieur dudit moule pour un temps d'arrêt compris entre environ 65% et environ 85% par rapport au temps requis pour la vulcanisation complète;
d) retirer le pneu (8) partiellement vulcanisé avec le support torique respectif du moule de vulcanisation (4) respectif;
e) achever la vulcanisation du pneu (8) à l'extérieur dudit moule de vulcanisation (4) par la chaleur donnée au pneu (8) par ledit support torique.

**2.** Procédé pour la production de pneus (8) pour roues de véhicules selon la revendication 1, dans lequel l'étape e) est réalisée dans une chambre fermée (5).

**3.** Procédé pour la production de pneus (8) pour roues de véhicules selon la revendication 2, comprenant en outre l'étape f) de transférer dans ladite chambre fermée (5) les pneus (8) partiellement vulcanisés et les supports toriques respectifs retirés des moules de vulcanisation (4) respectifs.

**4.** Procédé pour la production de pneus (8) pour roues de véhicules selon la revendication 2 ou 3, comprenant en outre l'étape de contrôle de la température à l'intérieur de la chambre fermée (5).

**5.** Procédé pour la production de pneus (8) pour roues de véhicules selon l'une quelconque des revendications 2 à 4, dans lequel chaque pneu (8) reste dans la chambre fermée (5) pour un temps t compris entre environ 2 et environ 10 minutes.

**6.** Procédé pour la production de pneus (8) pour roues de véhicules selon la revendication 5, dans lequel chaque pneu (8) reste dans la chambre fermée (5) pour un temps t compris entre environ 4 et environ 6 minutes.

**7.** Procédé pour la production de pneus (8) pour roues de véhicules selon l'une quelconque des revendications précédentes, dans lequel l'étape b) de transfert des pneus (8) fabriqués sur les supports toriques vers une Installation de vulcanisation (3) est réalisée au moyen d'un bras robotisé.

**8.** Procédé pour la production de pneus (8) pour roues de véhicules selon l'une quelconque des revendications 3 à 7, dans lequel l'étape f) de transfert des pneus (8) partiellement vulcanisés et des supports toriques respectifs est réalisée au moyen d'un bras robotisé.

**9.** Procédé pour la production de pneus (8) pour roues de véhicules selon l'une quelconque des revendications précédentes, dans lequel les moules de vulcanisation (4) sont déplacés dans ladite installation de vulcanisation (3) selon un parcours en boucle fermée, le transfert de chaque pneu (8) dans l'installation de vulcanisation (3) étant effectué après l'enlèvement du pneu partiellement vulcanisé (8) de la machine de vulcanisation (3) elle-même.

**10.** Procédé pour la production de pneus (8) pour roues de véhicules selon l'une quelconque des revendications 2 à 7, comprenant en outre l'étape g) de retirer les pneus (8) complètement vulcanisés de la chambre fermée (5).

**11.** Procédé pour la production de pneus (8) pour roues de véhicules selon la revendication 10, dans lequel ladite étape f) de transfert des pneus (8) partiellement vulcanisés et des supports toriques respectifs est réalisée après ladite étape g) de retirer les pneus (8) complètement vulcanisés de la chambre (5).

**12.** Procédé pour la production de pneus (8) pour roues de véhicules selon l'une quelconque des revendications précédentes, dans lequel ledit temps d'arrêt est compris entre environ 70% et environ 80% par rapport au temps nécessaire pour la vulcanisation complète.

**13.** Procédé pour la production de pneus (8) pour roues de véhicules selon l'une quelconque des revendications précédentes, dans lequel lors de l'étape c), le moule (4) donne à chaque pneu (8) et au support torique respectif une quantité totale de chaleur comprise entre environ 70% et environ 90% de la quantité de chaleur nécessaire pour obtenir la vulcanisation complète dudit pneu (8).

Fig. 1

_Fig. 2_

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 922561 A2
- WO 0132409 A
- DE 4417708
- JP 9193159 A
- EP 0913249 A
- WO 2004045837 A